# EUROPEAN PATENT SPECIFICATION

(11) **EP 4 108 486 B1**
(45) Date of publication and mention of the grant of the patent: **03.04.2024**
(21) Application number: 22179785.5
(22) Date of filing: 20.06.2022
(51) Int. Cl.: B60H 1/00, B60H 1/22

(54) **AN AIR CONDITIONING UNIT WITH DEPLOYABLE AND COLLAPSIBLE AIR DISTRIBUTION PIPES**
KLIMAANLAGE MIT AUSFAHRBAREN UND ZUSAMMENKLAPPBAREN LUFTVERTEILUNGSROHREN
UNITÉ DE CONDITIONNEMENT D'AIR AVEC DES TUYAUX DE DISTRIBUTION D'AIR DÉPLOYABLES ET REPLIABLES

(30) Priority: 21.06.2021 IT 202100016115
(43) Date of publication of application: 28.12.2022
(73) Proprietor: DENSO THERMAL SYSTEMS S.p.A., 10046 Poirino (Torino) (IT)
(72) Inventor: CARBONE, Andrea, I-10046 POIRINO (Torino) (IT); CREPALDI, Luca, I-10046 POIRINO (Torino) (IT); SEJA, Paolo, I-10046 POIRINO (Torino) (IT)
(74) Representative: Vanzini, Christian

(56) References cited:
- EP-A1- 1 939 021
- FR-A1- 2 924 056
- RU-U1- 179 572
- US-A1- 2006 222 346
- US-A1- 2008 093 843

## Description

This invention relates in general to systems which are used in vehicles to distribute the air treated by an air conditioning unit between the various outlets positioned on a dashboard or more generally inside a cabin of the vehicle.

These systems generally comprise a set of pipes designed to connect the air conditioning unit to the various outlets distributed inside the cabin. In general, the air distribution pipes are associated with flaps or similar shut-off devices for managing the distribution of the air between the various pipes. The geometry of the air distribution pipes is defined by the car manufacturer more or less specifically for each single model. The manufacturer of the air conditioning unit, meanwhile, creates a unit that is designed to work with the specific distribution geometry required by the vehicle manufacturer.

Another problem arises from the observation that, in general, the air flow exiting from an air conditioning unit has a particular temperature stratification. In general, pipes connected to regions of the air conditioning unit in which the outlet flow is relatively hot have to bring the air into specific zones of the cabin (for example the foot zone) that are different from those into which the pipes connected to regions of the air conditioning unit in which the outlet flow is relatively cold have to bring the air (for example the dashboard zone). In known architectures, this places a constraint on the configuration of the outlets of the air conditioning unit. For example, if, in the air conditioning unit, the exiting air flow is relatively hot in the upper part of the unit, it may be problematic to connect this part to the foot zone outlet, while the lower part of the unit has to be connected to the dashboard zone outlet, for example.

EP3741594A1, from the same applicant, proposes a solution based on flexible pipes that makes it possible to increase the versatility of the air conditioning unit. This known solution also makes it possible to reduce the number of parts and the number of assembly operations, as well as reduce the manufacturing costs and the overall packaging dimensions.

Document US 2008/093843 A1 discloses another air conditioning unit, which comes the closest to the subject-matter of the invention.

One aim is to provide an alternative means of managing the distribution of the air which, by comparison with the solution known from EP3741594A1, allows easier handling and transportation of the air conditioning unit.

In view of this aim, the subject matter of the invention is an air conditioning unit, comprising
a housing in which at least one air transport passage for directing an air flow within the housing is formed and in which an array of air distribution outlets connected to said at least one air transport passage is formed,
a plurality of air distribution pipes which are respectively joined to said air distribution outlets and configured to be connected to respective air outlets for distributing air within a cabin of a vehicle, and
wherein each of said air distribution pipes is flexible and has a structure which may be extended and contracted along the longitudinal axis of the pipe, between a maximum retraction condition and a maximum extension condition,
wherein coupling means are also provided for locking the air distribution pipe in the maximum retraction condition, said coupling means being releasable or removable.

According to the invention, the air conditioning unit is therefore provided with flexible pipes that make it possible to adapt a single model of air conditioning unit to a number of installation situations, which increases the versatility by comparison with known solutions. The air conditioning unit may therefore be provided by the unit manufacturer together with the air distribution system, which may be adapted to the positioning geometry of the air outlets in the cabin of the vehicle.

In particular, the problem of the stratification of the exiting air flow is solved by using flexible pipes, which make it possible to connect, for example, upper parts of the air conditioning unit with outlets positioned in lower zones in the cabin, and lower parts of the air conditioning unit with outlets positioned in upper zones in the cabin.

Moreover, since the flexible pipes are contractable, the overall dimensions of the air conditioning unit may be relatively reduced, which is advantageous for the packaging, transportation, handling and installation of the unit.

The unit preferably also comprises an array of heating elements which are controllable independently of each other, said array of heating elements being placed at the array of air distribution outlets.

According to one embodiment, the structure of the flexible pipes comprises an envelope wall and a reinforcement core which extends helically about the longitudinal axis of the pipe.

The coupling means are used to lock the air distribution pipe in the maximum retraction condition. Said coupling means are releasable or removable. This measure further increases the ease with which the air conditioning unit may be handled.

According to one embodiment, the unit also comprises a blower and an air supply duct which are connected to said at least one air transport passage, said air supply duct having an upstream end joined to the blower and a downstream end joined to the housing, wherein said air supply duct is formed as a bag comprising an envelope made of flexible and inflatable material.

According to one embodiment, the unit also comprises
a flap comprising a film having side edges and a plurality of openings arranged between said side edges, said flap being supported by said housing in such a way to extend through said array of air distribution outlets,
a rack extending along said film and having teeth arranged along said rack,
a toothed wheel which is rotatably supported by said housing in order to rotate about an axis, and which engages said teeth to linearly move said rack and said film,
wherein said rack is formed as a single flexible piece with said film, and fits against a wall of the housing on which said array of air distribution outlets is formed, in such a way to assume the profile of said wall.

In this case, a gasket layer may be provided which is fixed to said wall of the housing and against which said film of the flap rests.

Further features and advantages of the air conditioning unit according to the invention will become clearer from the following detailed description of some embodiments, made with reference to the accompanying drawings, provided purely for illustrative and non-limiting purposes, in which:
- Fig. 1 is a perspective view of an air conditioning unit according to the invention;
- Fig. 2 is a partial exploded view of the unit in Fig. 1;
- Fig. 3 and 4 are perspective views of an air distribution pipe of the unit in Fig. 1, in a maximum retraction condition and in an extension condition, respectively;
- Fig. 5 is a further partial exploded view of the unit in Fig. 1;
- Fig. 6 is a perspective view of a wall of the housing of the air conditioning unit;
- Fig. 7 is a perspective view which shows the inside of the air conditioning unit;
- Fig. 8 is a sectional view of the air conditioning unit; and
- Fig. 9 is a sectional view of a further embodiment of the air conditioning unit.

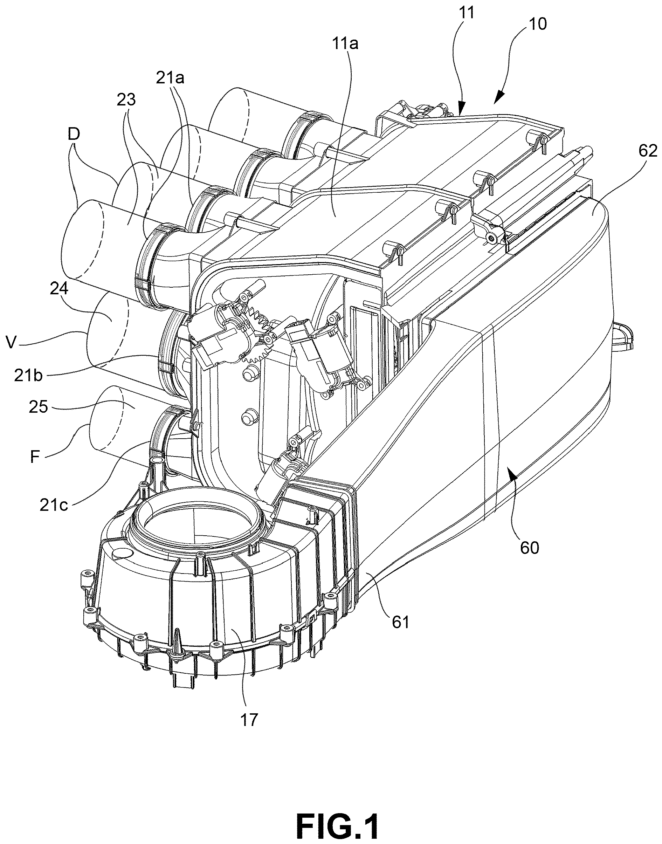

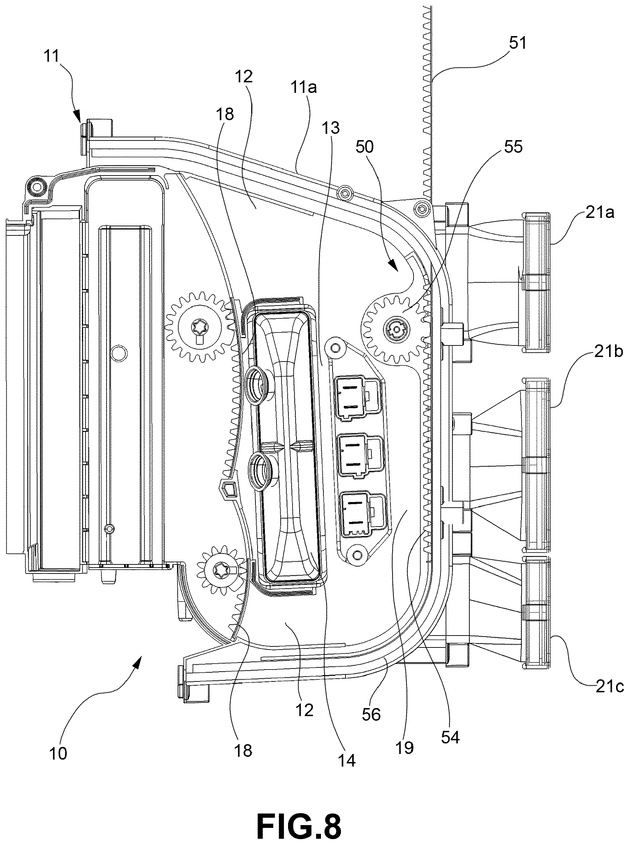

An air conditioning unit, denoted by reference sign 10, is shown schematically in the figures. Reference sign 11 is used to denote a housing for containing the air conditioning unit, which housing is generally made of a rigid plastics material. One or more passages for transporting the air treated by the air conditioning unit are formed within the housing 11. For example, Fig. 8 shows three air passages, specifically two passages for transporting cold air, denoted by 12, and a passage for transporting hot air, denoted by 13. A heating mass, denoted by 14, is arranged inside the passage 13 for transporting hot air. In the example shown, the air transport passages flow into a mixing chamber 19. Other conventional devices for treating air, for example an evaporator or filters (not shown), may be present in the air conditioning unit. Movable members, for example flaps 18, may also conventionally be present in the unit, which members may be controlled to switch the air between different pipes. A blower 17 (shown in Fig. 1) is also conventionally associated with the unit, which blower is designed to generate an air flow within the pipes 12, 13 of the air conditioning unit 10. This blower 17 is fluidically connected to the housing 11 in the manner described in the following.

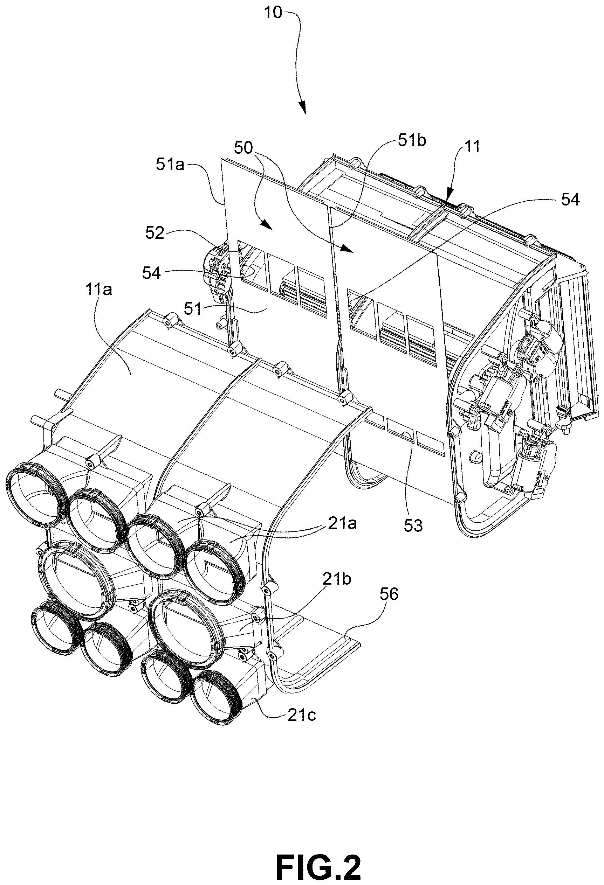

As may be seen in particular in Fig. 2, the air conditioning unit 10 also comprises an array of air distribution outlets 21a, 21b, 21c, which are fluidically connected to the air transport passages 12 and 13, in particular to the mixing chamber 19. The array of air distribution ducts 21a, 21b, 21c is formed on a wall 11a of the housing 11. The switching of the air flow between the various air distribution outlets 21a-c is managed by a film flap, which will be described in greater detail in the following.

A plurality of air distribution pipes 23, 24, 25 are respectively joined to the air distribution outlets 21a, 21b, 21c and are configured to be connected to respective air outlets D, V, F for distributing air within a cabin of a vehicle. For example, the air outlet denoted by D may be a defrost air outlet which is dedicated to defrosting/demisting the windshield and positioned on the top part of the dashboard below the windshield, the air outlet denoted by V may be a front ventilation air outlet positioned on the dashboard in front of the front seats, and the air outlet denoted by F may be a feet ventilation air outlet positioned at the bottom in the cabin. However, the number and arrangement of air outlets and therefore pipes may be different from that described herein.

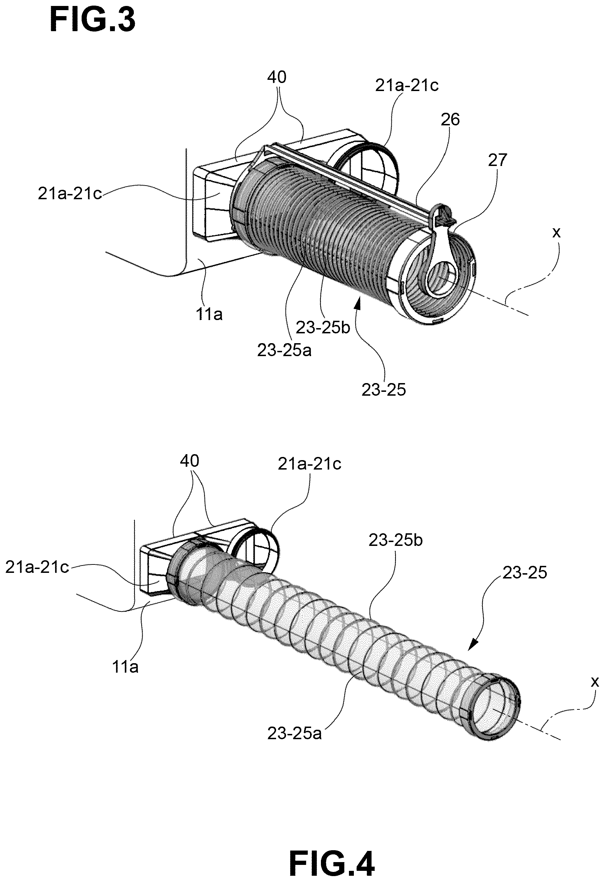

Each of the air distribution pipes 23-25 is made of a flexible material and has a structure which may be extended and contracted along the longitudinal axis x of the pipe, between a maximum retraction condition (shown in Fig. 3) and a maximum extension condition (shown in Fig. 4).

The distribution pipes 23-25 may be multilayer pipes. Alternatively or in combination, the air distribution pipes may comprise a layer formed by a fabric or by a weave of fibers or threads. Alternatively or in combination, the distribution pipes may comprise a reinforcement, for example metal wire or fiber, which is immersed in a matrix that forms the wall of the pipe or is coupled to the wall of the pipe.

In the example in Fig. 3 and 4, the structure of the pipe 23-25 comprises an envelope wall 23-25a and a reinforcement core 23-25b which extends helically about the longitudinal axis of the pipe.

In general, it is preferable for the choice and arrangement of the materials used and/or the geometric and structural configuration of the pipe to be such as to prevent the walls of the pipe from being able to collapse at the bends in the pipe, and also such as to prevent wall noise when the air flow flows through the pipe.

The distal end of each flexible pipe may be fixed to the particular air outlet in a manner known per se, for example by means of an elastic ring, a clamp or a clip.

Coupling means are provided for locking the air distribution pipe 23-25 in the maximum retraction condition. This arrangement allows for the air conditioning unit to be handled and transported. The coupling devices have to be releasable or removable in order to allow the air distribution pipes 23-25 to be stretched out to allow them to connect to the respective air outlets, when the air conditioning unit is installed inside a vehicle. In the example shown, the coupling device comprises a rigid rod 26 that has a proximal end fixed to the air distribution outlet 21a-c to which the air distribution pipe 23-25 is joined, and a retaining element 27 that is fixed to a distal end of the rod 26 and is arranged so as to be engaged by the distal end of the air distribution pipe 23-25 in order to hold the pipe in the maximum retraction condition and prevent it from extending. When the air conditioning unit is installed in a vehicle, the coupling device may be broken or even removed by the installer. According to alternative embodiments (not shown), the coupling device may be arranged on the air distribution pipe.

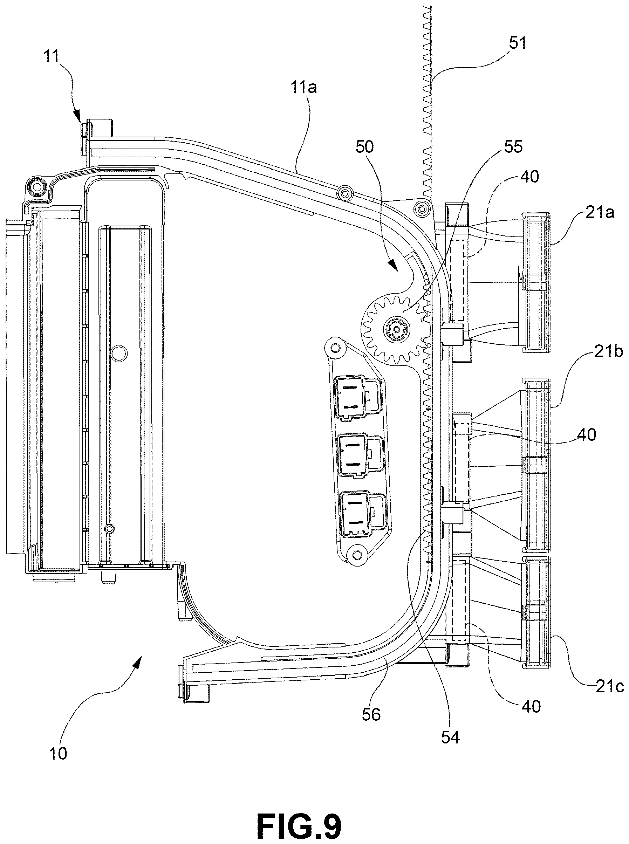

Fig. 9 shows an alternative embodiment which comprises an array of heating elements 40 instead of the heating mass 14 which was provided in the embodiment in Fig. 8. The heating elements 40 are positioned at the array of air distribution outlets 21a-21c and are controllable independently of each other. The heating elements 40 may be electrical resistance heating elements, for example positive temperature coefficient (PTC) heating elements. However, the type of technology used for the heating elements is not essential to the purposes of the invention.

The heating elements 40 may be arranged so as to form a two-dimensional or one-dimensional matrix. The array of heating elements 40 is placed in front, i.e. upstream, of the proximal ends of the distribution pipes 23-25 joined to the air distribution outlets 21a-21c.

The fact of having a structure with all of the distribution pipes 23-25 arranged in an ordered, planar pattern therefore makes it possible to associate the pipes with an ordered set of heating elements, with an independent heating element, or a subset of independent heating elements, being assigned for each of these pipes. It is thus possible to manage the temperature of the air in each single pipe 23-25 by controlling the heating element(s) 40 associated therewith.

As may be seen in Fig. 9, the air conditioning unit 10 connected upstream of the distribution pipes 23-25 may be simplified by comparison with conventional units. In fact, the unit may not have any heaters in its interior, and therefore may not have any dedicated channels or flaps for switching the air between the various channels, either. In fact, optionally only the evaporator (not shown) is provided in the air conditioning unit in Fig. 9.

The unit 10 therefore has a more compact layout by comparison with conventional units. In the configuration in Fig. 8, the air always passes through the single heaters 40, and controlling these heaters sets the desired temperature specifically for each of the outlet ducts 23-25. This selection imposes an additional delta P in the case of maximum cold ventilation flow, but the described configuration, which is provided with flexible pipes and does not need additional guards, shafts or air guides, has a total pressure drop which is nevertheless advantageous over the conventional solutions in use.

The fact that the temperature is controlled independently for each outlet also makes it easier to achieve temperature control linearity and stratification performance (temperature difference between different outlets, required for comfort). In addition to it being simpler to complete the fine-tuning for these performances (i.e. fine-tuning a software algorithm), the performance level is much higher than that of classic modules, in that it is no longer necessary to accept compromises with respect to the specification.

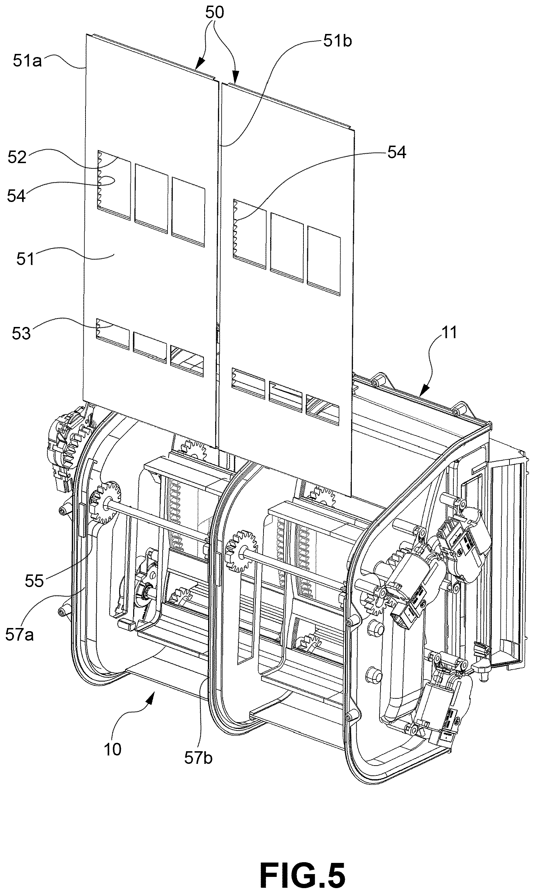

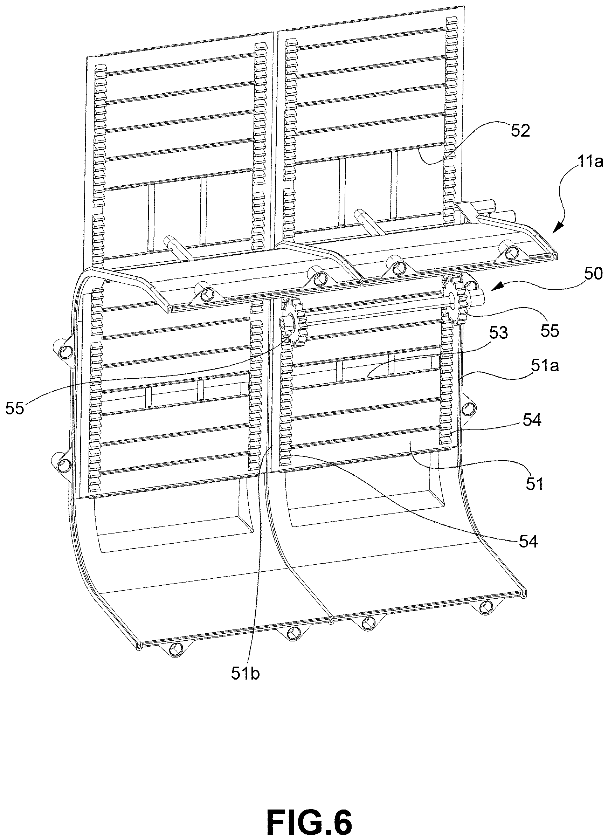

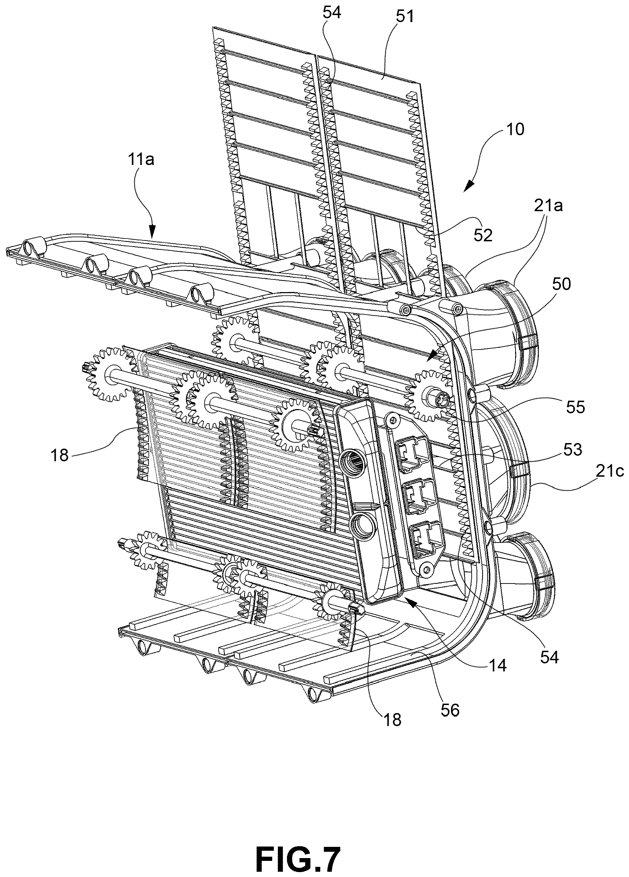

With reference in particular to Figs. 2 and 5-8, the air flow which reaches the mixing chamber 19 is switched by means of a film flap, denoted by reference sign 50. In the example shown, there are two film flaps because the air conditioning unit is designed for dual-zone air conditioning; however, this arrangement is not essential to the invention. The flap 50 comprises a film 51 which is made of a flexible material and has side edges 51a, 51b and a plurality of openings 52, 53 arranged between the side edges 51a, 51b. The flap 50 is supported by the housing 11 of the air conditioning unit, for example by means of guides or a support frame, in such a way as to extend through the array of air distribution outlets 21a-21c. In the example shown, the side edges of the film 51 of the flap 50 are arranged in and are capable of sliding along respective guide grooves 57a, 57b which are formed in side walls of the housing 11 and delimited at the front by the wall 11a in which the air distribution openings 21a-21c are formed. The guide grooves 57a, 57b therefore run along said wall 11a.

A rack 54 (preferably more than one rack) is also provided, which rack extends along the film 51 and has teeth arranged along said rack, and a toothed wheel 55 (preferably more than one toothed wheel) is also provided, which toothed wheel is rotatably supported by the housing 11 of the air conditioning unit in order to rotate about an axis and engages the teeth of the rack 54 in order to linearly move the rack 54 and the film 51.

The rack 54 is formed as a single flexible piece with the film 51, and fits against the wall 11a of the housing 11 on which the array of air distribution outlets 21a-21c is formed, in such a way to assume the profile of the wall 11a. In other words, the rack 54 and the film 51 conform to the profile of the wall 11a.

A gasket layer 56, for example made of elastomeric or expanded material, is preferably also provided, which gasket layer is fixed to the wall 11a of the housing 11. The gasket layer may be, for example, made of polyurethane with a surface coating of nylon fibers, in order to guarantee strength and reliability. The windows in the gasket layer 56 are preferably formed in this layer before it is fixed to the wall 11a, when this layer is still flat; the gasket layer is therefore virtually free of defects in shape. The film 51 of the flap 50 rests against the gasket layer 56, in a condition of constant compression ensured by the manner in which the film 51 is mounted (guides and optional support frames).

Since the flap 50 is flat and is therefore adapted to the shape of the wall 11a, this guarantees a constant preload toward the gasket layer 56. This allows optimal sealing with respect to air losses, and prevents the flap from vibrating/juddering.

Therefore, by sliding a single flap 50, it is possible to manage the switching of the air flow between the various air distribution outlets 21a-21c by adjusting the position of the openings 52, 53 with respect to the air distribution outlets 21a-21c. Since the openings 52, 53 also have different widths, it is possible to modulate the quantity of air directed to the air distribution outlets 21a-21c.

With reference to Fig. 1, the blower 17 is connected to the housing 11 of the air conditioning unit via a supply duct 60. The air supply duct 60 has an upstream end 61 joined to the blower 17 and a downstream end 62 joined to the housing 11 of the air conditioning unit. The air supply duct 60 is formed as a bag comprising an envelope made of flexible and inflatable material, for example cloth.

The air conditioning unit is generally installed in proximity to a firewall which separates the engine compartment from the passenger compartment of the vehicle. The flexible and inflatable air supply duct 60 therefore makes it possible to manage the technical ports between the air conditioning unit and the firewall, optionally also allowing contact with the latter, without detriment to the flow of air that may be transported by the duct. It also allows greater flexibility in terms of the positioning of the blower, as well as a reduction in the overall weight of the air conditioning unit.

It is understood that the invention is not limited to the embodiments described and shown here, but instead may be subject to modifications relating to the shape and arrangement of parts and design and operating details, according to the numerous possible variants that will appear appropriate to those skilled in the art, and which are to be understood as included within the scope of the invention, as defined by the following claims.

## Claims

1. An air conditioning unit, comprising
a housing (11) in which at least one air transport passage (12, 13) for directing an air flow within the housing (11) is formed and in which an array of air distribution outlets (21a, 21b, 21c) connected to said at least one air transport passage is formed, and
a plurality of air distribution pipes (23, 24, 25) which are respectively joined to said air distribution outlets and configured to be connected to respective air outlets (D, V, F) for distributing air within a cabin of a vehicle,
wherein each of said air distribution pipes is flexible and has a structure (23-25a, 23-25b) deployable and collapsible along the longitudinal axis (x) of the pipe, between a maximum retraction condition and a maximum extension condition,
**characterized in that** said unit also comprises coupling means (26, 27) for locking the air distribution pipe (23, 24, 25) in the maximum retraction condition, said coupling means being releasable or removable.

2. The unit according to claim 1, further comprising an array of heating elements (40) which are controllable independently of each other, said array of heating elements being placed at the array of air distribution outlets (21a, 21b, 21c).

3. The unit according to claim 1 or 2, wherein said structure comprises an envelope wall (23-25a) and a reinforcement core (23-25b) helically extending about the longitudinal axis of the pipe.

4. The unit according to any of the preceding claims, further comprising a blower (17) and an air supply duct (60) which are connected to said housing, said air supply duct having an upstream end (61) joined to the blower (17) and a downstream end (62) joined to the housing (11), wherein said air supply duct (60) is formed as a bag comprising an envelope made of flexible and inflatable material.

5. The unit according to any of the preceding claims, further comprising
a flap (50) comprising a film (51) having side edges (51a, 51b) and a plurality of openings (52, 53) arranged between said side edges, said flap being supported by said housing in such a way to extend through said array of air distribution outlets (21a, 21b, 21c),
a rack (54) extending along said film and having teeth arranged along said rack,
a toothed wheel (55) which is rotatably supported by said housing in order to rotate about an axis, and which engages said teeth to linearly move said rack and said film,
wherein said rack is formed as a single flexible piece with said film, and fits against a wall (11a) of the housing (11) on which said array of air distribution outlets (21a, 21b, 21c) is formed, in such a way to assume the profile of said wall.

6. The unit according to claim 5, further comprising a gasket layer (56) which is fixed to said wall (11a) of the housing (11), and against which said film of the flap rests.

## Patentansprüche

1. Klimaanlagen-Einheit, aufweisend
ein Gehäuse (11), in welchem mindestens ein Lufttransportdurchlass (12, 13) zum Leiten eines Luftstroms innerhalb des Gehäuses (11) ausgebildet ist und in welchem eine mit dem mindestens einen Lufttransportdurchlass verbundene Anordnung von Luftverteilungsauslässen (21a, 21b, 21c) ausgebildet ist, und
eine Mehrzahl von Luftverteilungsrohren (23, 24, 25), die jeweils mit den Luftverteilungsauslässen verbunden und dazu ausgelegt sind, mit jeweiligen Luftauslässen (D, V, F) zum Verteilen von Luft innerhalb einer Kabine eines Fahrzeugs verbunden zu werden,
wobei jedes der Luftverteilungsrohre flexibel ist und eine Struktur (23-25a, 23-25b) aufweist, die entlang der Längsachse (x) des Rohrs zwischen einem maximal eingefahrenen Zustand und einem maximal ausgefahrenen Zustand ausfahrbar und einfahrbar ist,
**dadurch gekennzeichnet, dass** die Einheit auch Kopplungselemente (26, 27) zum Arretieren der Luftverteilungsrohre (23, 24, 25) in dem maximal eingefahrenen Zustand aufweist, wobei die Kopplungselemente lösbar oder abnehmbar sind.

2. Einheit nach Anspruch 1, weiter aufweisend eine Anordnung von Heizelementen (40), die unabhängig voneinander steuerbar sind, wobei die Anordnung von Heizelementen an der Anordnung von Luftverteilungsauslässen (21a, 21b, 21c) platziert ist.

3. Einheit nach Anspruch 1 oder 2, wobei die Struktur eine Ummantelungswand (23-25a) und einen sich wendelförmig um die Längsachse des Rohrs erstreckenden Verstärkungskern (23-25b) aufweist.

4. Einheit nach einem der vorangehenden Ansprüche, weiter aufweisend ein Gebläse (17) und einen Luftzufuhrkanal (60), welche mit dem Gehäuse verbunden sind, wobei der Luftzufuhrkanal ein mit dem Gebläse (17) verbundenes stromaufwärtiges Ende (61) und ein mit dem Gehäuse (11) verbundenes stromabwärtiges Ende (62) aufweist, wobei der Luftzufuhrkanal (60) als Beutel ausgebildet ist, der eine Umhüllung aus flexiblem und aufblasbarem Material aufweist.

5. Einheit nach einem der vorangehenden Ansprüche, weiter aufweisend
eine Klappe (50), die eine Folie (51) mit Seitenrändern (51a, 51b) und eine Mehrzahl von zwischen den Seitenrändern angeordneten Öffnungen (52, 53) aufweist, wobei die Klappe derart von dem Gehäuse gehalten ist, dass sie sich durch die Anordnung von Luftverteilungsauslässen (21a, 21b, 21c) hindurch erstreckt,
eine Halterung (54), die sich entlang der Folie (51) erstreckt und die Zähne aufweist, welche entlang der Halterung angeordnet sind,
ein Zahnrad (55), das drehbar von dem Gehäuse gehalten ist, um sich um eine Achse herum zu drehen, und welches in die Zähne eingreift, um die Halterung und die Folie linear zu bewegen,
wobei die Halterung als ein einziges flexibles Stück mit der Folie ausgebildet ist und derart an einer Wand (11a) des Gehäuses (11), auf der die Anordnung von Luftverteilungsauslässen (21a, 21b, 21c) ausgebildet ist, anliegt, dass sie das Profil der Wand annimmt.

6. Einheit nach Anspruch 5, weiter aufweisend eine Dichtungsschicht (56), die an der Wand (11a) des Gehäuses (11) befestigt ist und an der die Folie der Klappe anliegt.

## Revendications

1. Unité de conditionnement d'air, comprenant
un boîtier (11) dans lequel au moins un passage de transport d'air (12, 13) pour diriger un écoulement d'air dans le boîtier (11) est formé et dans lequel un réseau de sorties de distribution d'air (21a, 21b, 21c) relié audit au moins un passage de transport d'air est formé, et
une pluralité de tuyaux de distribution d'air (23, 24, 25) qui sont respectivement assemblés avec lesdites sorties de distribution d'air et configurés pour être reliés à des sorties d'air (D, V, F) respectives pour distribuer de l'air dans un habitacle d'un véhicule,
dans laquelle chacun desdits tuyaux de distribution d'air est flexible et a une structure (23-25a, 23-25b) déployable et repliable le long de l'axe longitudinal (x) du tuyau, entre un état de rétraction maximale et un état d'extension maximale,
**caractérisée en ce que** ladite unité comprend également des moyens d'accouplement (26, 27) pour verrouiller le tuyau de distribution d'air (23, 24, 25) dans l'état de rétraction maximale, lesdits moyens d'accouplement étant libérables ou amovibles.

2. Unité selon la revendication 1, comprenant en outre un réseau d'éléments de chauffage (40) qui peuvent être commandés indépendamment les uns des autres, ledit réseau d'éléments de chauffage étant placé au niveau du réseau de sorties de distribution d'air (21a, 21b, 21c).

3. Unité selon la revendication 1 ou 2, dans laquelle ladite structure comprend une paroi d'enveloppe (23-25a) et un coeur de renforcement (23-25b) s'étendant de manière hélicoïdale autour de l'axe longitudinal du tuyau.

4. Unité selon l'une quelconque des revendications précédentes, comprenant en outre une soufflerie (17) et une conduite d'alimentation en air (60) qui sont reliées audit boîtier, ladite conduite d'alimentation en air ayant une extrémité amont (61) assemblée avec la soufflerie (17) et une extrémité aval (62) assemblée avec le boîtier (11), dans laquelle ladite conduite d'alimentation en air (60) est formée comme un sac comprenant une enveloppe faite d'un matériau flexible et gonflable.

5. Unité selon l'une quelconque des revendications précédentes, comprenant en outre
un volet (50) comprenant un film (51) ayant des bords de côté (51a, 51b) et une pluralité d'ouvertures (52, 53) agencées entre lesdits bords de côté, ledit volet étant supporté par ledit boîtier de façon à ce qu'il s'étende à travers ledit réseau de sorties de distribution d'air (21a, 21b, 21c),
une crémaillère (54) s'étendant le long dudit film et ayant des dents agencées le long de ladite crémaillère,
une roue dentée (55) qui est supportée de manière rotative par ledit boîtier afin de tourner autour d'un axe, et qui vient en prise avec lesdites dents pour déplacer de manière linéaire ladite crémaillère et ledit film,
dans laquelle ladite crémaillère est formée comme une seule pièce flexible avec ledit film, et s'ajuste contre une paroi (11a) du boîtier (11) sur laquelle ledit réseau de sorties de distribution d'air (21a, 21b, 21c) est formé, de façon à ce qu'elle adopte le profil de ladite paroi.

6. Unité selon la revendication 5, comprenant en outre une couche de joint (56) qui est fixée à ladite paroi (11a) du boîtier (11), et contre laquelle ledit film du volet repose.
